# EUROPEAN PATENT APPLICATION

(11) **EP 1 480 462 A1**
(43) Date of publication of application: **24.11.2004**
(21) Application number: 04076288.2
(22) Date of filing: 27.04.2004
(51) Int. Cl.: H04N 7/18

(54) **Apparatus for the recording, remote transmission and display of images and sounds from / for a plurality of terminals.**

(30) Priority: 20.05.2003 IT mi20031012
(71) Applicant: Fly S.R.L., Veniano (Como) (IT)
(72) Inventor: Galimberti, Roberto, Monza (MI) (IT)
(74) Representative: Raimondi, Margherita

(57) **Abstract**

Apparatus for the recording, remote transmission and display of images and sounds, comprising: means (110,111) for recording images and sounds, arranged in at least one sensing station (1); means (120,121) for analog/digital conversion of the images and sounds; means (130) for compressing the digital signals representing the images and sounds; means (310) for radiofrequency transmission of the compressed digital signals to at least one receiving station (2); means (310) for receiving the digital signals transmitted at radiofrequency, arranged in at least one receiving station (2); means (210,220) for decoding and displaying the digital images and converting the sound signals into analog signals in the audible frequency range, associated with the receiving station (2); in which said receiving station (2;1002;2002) comprises at least one transceiver console (400) situated at a distance from the recording means (110,120) and connected thereto and to at least one receiving/transmitting terminal device (2;1002;2002), said recording station (1), console (400) and terminals (2;1002;2002) comprising transmitting/receiving means (310) of the DECT type with a frequency modulation (GFSK) device having an operating frequency of between 1500 and 2300 MHz for the transmission/reception of the digital image and/or sound signals.

## Description

The present invention relates to an apparatus for the recording, remote transmission and display of images and sounds, comprising a plurality of receiving/transmitting terminals of the DECT type for the transmission/reception of digital image and/or sound signals.

Devices for exchanging (two-way) sound signals and/or sending (one-way) signals for remotely activating actuator devices are known.

Examples of these devices consist of the intercom systems for residential buildings, which comprise a component situated outside the building and one or more components situated inside the dwelling(s), by means of which it is possible to have a conversation from inside with someone outside, and vice versa, as well as open doors and the like.

More sophisticated versions of these devices consist of video intercom systems which also allow a video recording of the outside zone and transmission of the images to an associated display device situated inside the dwelling.

Although performing their function, the video intercom systems known in the art require, however, complex and costly wiring of the leads which connect the various devices situated respectively outside and inside the dwelling, thus resulting in complicated and costly work for installation thereof, in particular in old buildings which are not equipped with special ducts for housing the transmission cables.

It is known from EP 1,280,352 in the name of same present Applicants that, in order to provide a solution to said problems, a video intercom apparatus for the transmission of images and sounds has been developed, said apparatus being able to transmit both images and sounds without the need for connecting wires.

Use of this apparatus is however substantially limited to the management of a small number of local receiving and transmitting stations.

The technical problem which is posed, therefore, is that of providing a video intercom apparatus which is able to transmit sound, video and command signals and does not require leads for connecting the various transmitting/receiving devices situated outside and/or inside the dwelling and is able to allow management of a plurality of these receiving and/or transmitting and/or sensing and monitoring devices.

Within the scope of this problem a further requirement is that said management should be able to be carried out also by users who are situated outside the dwelling and at a great distance therefrom and that this apparatus should allow a good definition of the images transmitted and should be easy and inexpensive to install.

These technical problems are solved according to the present invention by an apparatus for the recording, remote transmission and display of images and sounds, comprising: means for recording images and sounds, arranged in at least one sensing station; means for analog/digital conversion of the images and sounds; means for compressing the digital signals representing the images and sounds; means for radiofrequency transmission of the compressed digital signals to at least one receiving station; means for receiving the digital signals transmitted at radiofrequency, arranged in at least one receiving station; means for decoding and displaying the digital images and converting the sound signals into analog signals in the audible frequency range, associated with the receiving station; wherein said receiving station comprises at least one transceiver console situated at a distance from the recording means and connected thereto and to at least one receiving/transmitting terminal device, said recording station, console and terminals comprising transmission/receiving means of the DECT type with a frequency modulation (GFSK) device having an operating frequency of between 1500 and 2300 MHz for the transmission/reception of the digital image and/or sound signals.

Further details may be obtained from the following description of a non-limiting example of embodiment of the invention, provided with reference to the accompanying illustrative plates in which:
Figure 1 shows a general functional block diagram of the apparatus according to the present invention;
Figure 2 shows a block diagram of the various component parts of the apparatus according to Fig. 1;
Figure 3 shows a functional diagram of the various component parts of a further example of embodiment of the apparatus according to Fig. 1.

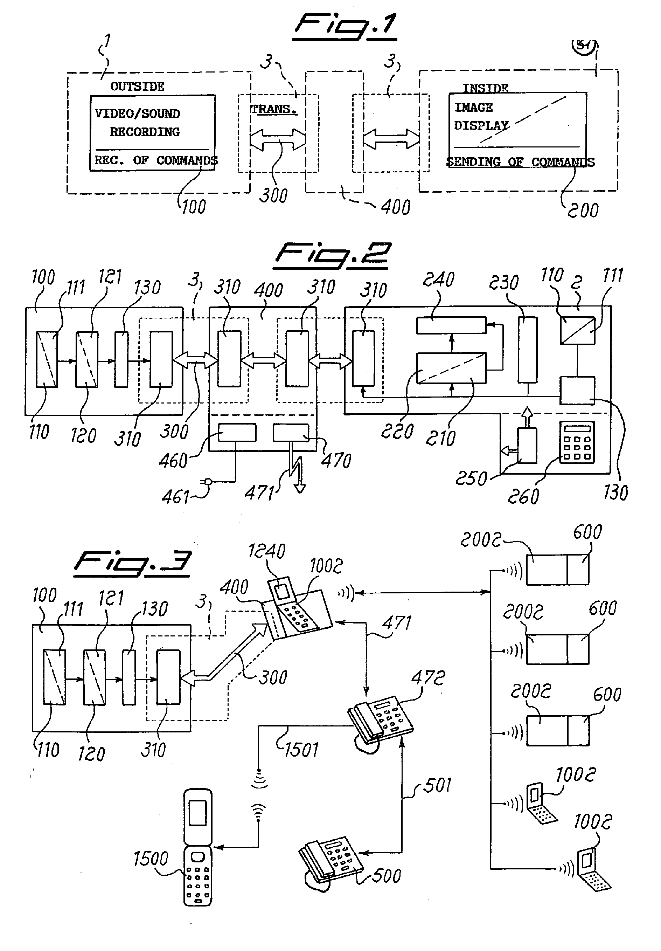

As illustrated in Fig. 1, the apparatus according to the invention is composed essentially of a sound and image recording device 1 arranged outside a dwelling and a console 400, arranged inside the said dwelling, for receiving the images and sounds sensed outside: said console 400 is in turn associated with at least one receiving/transmitting terminal device 2 for reproducing the sounds and displaying the images as well as for generating any command signals to be sent outside.

A radiofrequency transceiver device 3 is situated between the external device 1 and the console 400 and between the latter and the terminal device 2.

In greater detail the sensing device 1 comprises recording means 100 consisting of a video camera 110 able to record images, preferably but not exclusively using digital technology, and a microphone circuit 11 able to detect the sounds.

In the case where the images are recorded using analog technology, means 120 are envisaged for analog/digital conversion of the said images, while the sound signals which are always analog envisage an associated analog/digital conversion circuit 121.

Once digital signals have been obtained both for the image and the sound, said signals are sent to processing and compression means 130 so as to allow transmission thereof.

This compression is performed using mathematical algorithms which are known in the art for example by the abbreviations JPEG, JPEG2, MPEG and the like.

In a preferred embodiment recording is performed using colour images and sampled at a rate of at least two photograms per second.

The two-way transmission devices 3 consist of electronic transceiver circuits 310 which use a communications protocol 300 which is referred to by the abbreviation DECT (Digital Enhanced Cordless Telecommunications) which envisages a frequency modulation device of the type known as GFSK (Gaussian Frequency Shift Keying) which is made to operate at a frequency of between 1500 and 2300 MHz, preferably 1880 and 1900 MHz, with a transmission speed of at least 20 kbit/s and preferably 64 kbit/s which allows simultaneous transmission of the sound (8 kbit/s) and the image (56 kbit/s).

The terminal 2 (Fig. 2) is provided internally with means 210 for D/A conversion of the images and means 220 for D/A conversion of the sounds so that images and sounds may be reproduced on a display device 240.

As illustrated in Fig. 2, it is envisaged moreover that the console 400 in turn comprises receiving and transmitting means 310 of the DECT type for receiving/transmitting the signals, a battery charging device 460 which can be connected, via cable 461, to the electric mains and, by means of contacts (not shown), to a battery 250 of the terminal device 2.

Once the signals have been transmitted to the console 400, they are forwarded to the terminal 2 by means of a further transceiver device 310 of the DECT type housed in the said terminal.

In addition to this, it is envisaged that the terminal 2 comprises devices 111 for recording the sounds with associated A/D conversion means 121 connected to compression means 130 entirely similar to that described for the sensing station 1. In this way the signals output from the compression means 130 of the terminal 2 are sent to the DECT transmission means 310 and from here to the console 400 for transmission back outside or, as illustrated in Fig. 3, for connection to other terminals.

According to the invention it is envisaged moreover that the video intercom apparatus comprises means 230 for transmitting command signals - for example for opening doors, switching on lights and the like - from the terminal station 2 to the sensing station 1. Since said means are known per se, they are not described in detail, it nevertheless being implicit that this transmission is also performed at radiofrequency by means of the DECT transceiver devices 310 in order to avoid the need for electric wires.

In this way, as shown in Fig. 3, the reproduction device 2 may also be realized in the form of a small wireless handset 1002 with display 1240 arranged on the console 400.

Said console 400 may be realized in the form of a table-like support, as shown, or in the form of a wall-like support, being able to be hung from said wall by means of corresponding fastening means.

As illustrated in Fig. 2, it is envisaged moreover that the internal console 400 comprises further means 470 for connection to a telephone transmission network, essentially consisting of an electronic board 470 for telephone equipment, suitable also for DECT connection, and connection means 471 for connection to the telephone network shown by way of example in the figure as a fixed telephone apparatus 472 which is in turn linked by means of the external telephone network 501 to remote telephone apparatus 500.

In this configuration of the apparatus, the terminal 2, 1002 comprises a telephone dialler 260 so that the terminal itself is also able to operate as a normal wireless telephone as well as a terminal of the video intercom apparatus.

Figure 3 shows a further embodiment of the apparatus according to the invention in which the connection to the telephone network 472 may be effected by means of channels 1501 of mobile telephone equipment shown by way of example in the figure in the form of a cellular telephone 1500.

The console 400 may also be connected via radio to receiving/transmitting terminals 2002 associated with monitoring devices 600, for example consisting of telecameras; in this case the terminal 2002 comprises devices 110,111 for acquisition and A/D conversion of the sounds, devices 120,121 for acquisition and A/D conversion of the images, devices 130 for coding and compression of the digital signals, as well as DECT transmission means 310 already described.

In this way said monitoring devices 600 may be activated/deactivated by means of radio signals sent from a remote location via the telephone connection from a mobile phone 1500; vice versa, with the latest developments in mobile telephone technology it will also be possible to receive on the mobile phone 1500 the images received from the telecameras 600 so that the user is able to monitor visually the areas covered by the recording system even when far away.

It is envisaged moreover that the telecameras 600 may also be connected to recording means which are per se conventional and therefore not illustrated nor described in detail.

In addition to this it is envisaged that several terminals 1002 may be connected to the console 400 and, by means of their own DECT transmission means, may also dialogue with each other and with the various internal accessory devices 600 and/or external accessory devices 500, 1500.

Should it be required to expand the range of the apparatus it is possible to use signal repeaters arranged between the external station 1 and the internal console 400.

It is therefore clear how the apparatus according to the invention is able to achieve essentially both the local and remote management of a plurality of reception/transmission and sensing/monitoring devices, allowing among other things telephone communication between user and said devices.

It is envisaged in particular that the remote user may reply by means of mobile phone to a video intercom call made from the external station 1 and directed by means of the console 400 and the telephone network 1501 to the mobile phone 1500 of the said user.

## Claims

1. Apparatus for the recording, remote transmission and display of images and sounds, comprising:
- means (110,111) for recording images and sounds arranged in at least one sensing station (1);
- means (120,121) for analog/digital conversion of the images and sounds;
- means (130) for compressing the digital signals representing the images and sounds;
- means (310) for radiofrequency transmission of the compressed digital signals to at least one receiving station (2);
- means (310) for receiving the digital signals transmitted at radiofrequency, arranged in at least one receiving station (2);
- means (210,220) for decoding and displaying the digital images and converting the sound signals into analog signals in the audible frequency range, associated with the receiving station (2);
**characterized in that** said receiving station (2;1002;2002) comprises at least one transceiver console (400) situated at a distance from the recording means (110,120) and connected thereto and to at least one receiving/transmitting terminal device (2;1002;2002), said recording station (1), console (400) and terminals (2;1002;2002) comprising transmitting/receiving means (310) of the DECT type with a frequency modulation (GFSK) device having an operating frequency of between 1500 and 2300 MHz for the transmission/reception of the digital image and/or sound signals.

2. Apparatus according to Claim 1, **characterized in that** said console (400) comprises means (460) for charging a battery (250) which can be connected via cable (461) to the electric network.

3. Apparatus according to Claim 1, **characterized in that** said console (400) is in the form of a table-like support.

4. Apparatus according to Claim 1, **characterized in that** said console (400) is in the form of a wall-like support.

5. Apparatus according to Claim 1, **characterized in that** said terminal device (2;1002;2002) comprises a power supply battery (250).

6. Apparatus according to Claim 1, **characterized in that** said receiving/transmitting terminal (2;1002) is in the form of a telephone handset (1002).

7. Apparatus according to Claim 1, **characterized in that** said terminal (2;1002) can be connected to the console (400) by means of electrical contacts.

8. Apparatus according to Claim 1, **characterized in that** said console (400) comprises means (470,471) for connection to the external telephone network (501,500;1501,1500).

9. Apparatus according to Claim 8, **characterized in that** said means (470) for connection to the external telephone network consist of an electronic board for telephone equipment suitable for connection to said DECT means (310).

10. Apparatus according to Claim 9, **characterized in that** said means (471) for connection to the external telephone network comprise a wired-connection component.

11. Apparatus according to Claim 8, **characterized in that** said external telephone network (501) is of the type for fixed telephone equipment.

12. Apparatus according to Claim 8, **characterized in that** said means for connection to the external telephone network comprise radiofrequency receiving/transmitting devices (1501).

13. Apparatus according to Claim 12, **characterized in that** it comprises mobile telephone means (1500).

14. Apparatus according to Claim 8, **characterized in that** said receiving/transmitting terminal (2;1002) comprises a telephone dialler (260).

15. Apparatus according to Claim 1, **characterized in that** said receiving/transmitting terminal (2002) is associated with monitoring devices (600).

16. Apparatus according to Claim 15, **characterized in that** said monitoring devices consist of telecameras (600).

17. Apparatus according to Claim 15, **characterized in that** said receiving/transmitting terminal (2002) comprises devices (110,111) for acquisition and A/D conversion of the sounds, devices (120,121) for acquisition and A/D conversion of the images, and devices (130) for coding and compression of the digital signals.

18. Apparatus according to Claim 15, **characterized in that** it comprises means for recording the data sensed by the monitoring devices (600).

19. Apparatus according to Claim 1, **characterized in that** the operating frequency of the DECT transmission means (310) is preferably between 1980 and 1990 MHz.

20. Apparatus according to Claim 1, **characterized in that** said transmission means (310) operate at a transmission speed of at least 20 kbit/s.

21. Apparatus according to Claim 20, **characterized in that** said transmission means (310) operate preferably at a transmission speed of 64 kbits/s.

22. Apparatus according to Claim 1, **characterized in that** the analog/digital conversion means are associated with means (130) for processing and compressing the image.

23. Apparatus according to Claim 21, **characterized in that** said compression means are mathematical algorithms of the JPEG, JPEG2, MPEG type.

24. Apparatus according to Claim 1, **characterized in that** the colour images are sampled at a rate of at least two photograms per second.

25. Apparatus according to Claim 1, **characterized in that** it is a video intercom apparatus.

26. Apparatus according to Claim 1, **characterized in that** said at least one receiving/transmitting terminal (2;1002) comprises means (230) for generating command signals able to be transmitted at radiofrequency to actuator devices by means of said transmission means (310).

27. Apparatus according to Claim 1, **characterized in that** it comprises repeater devices arranged between the sensing station (1) and the receiving station (2).
